Europäisches Patentamt

European Patent Office

Office européen des brevets

(19)

(11) Veröffentlichungsnummer: **0 211 824**
**B1**

(12) **EUROPÄISCHE PATENTSCHRIFT**

(45) Veröffentlichungstag der Patentschrift:
**05.10.88**

(21) Anmeldenummer: **85900625.6**

(22) Anmeldetag: **13.02.85**

(86) Internationale Anmeldenummer:
**PCT/CH 85/00025**

(87) Internationale Veröffentlichungsnummer:
**WO 86/04778** (28.08.86 Gazette 86/19)

(51) Int. Cl.⁴: **A 01 K 31/16**

(54) **LEGENEST-ANLAGE.**

(43) Veröffentlichungstag der Anmeldung:
**04.03.87 Patentblatt 87/10**

(45) Bekanntmachung des Hinweises auf die Patenterteilung:
**05.10.88 Patentblatt 88/40**

(84) Benannte Vertragsstaaten:
**AT CH DE GB LI NL SE**

(56) Entgegenhaltungen:
**FR - A - 1 860 642**

(73) Patentinhaber: **KLingentalmühle AG, Klingental 17,
CH-4058 Basel (CH)**

(72) Erfinder: **TEIJGELER, Hendrik, Grellingerstrasse 16,
CH-4142 Münchenstein (CH)**

(74) Vertreter: **Scheidegger, Zwicky, Werner & Co.,
Stampfenbachstrasse 48 Postfach, CH-8023 Zürich (CH)**

**Beschreibung**

Die Erfindung betrifft eine Legenest-Anlage für Geflügel mit in Reihen nebeneinander und etagenweise übereinander in einem Gestell angeordneten Abrollnestern. Legenester in dieser Anordnung zur Aufstellung in einem Geflügelstall für Geflügelhaltung nach dem Volièren-System sind bekannt, bei dem den Tieren ein Einstreuboden zum Scharren und oberhalb desselben in Etagen übereinander angeordnete Sitzstangen zur Verfügung stehen, zwischen denen sich die Tiere frei bewegen können und in von den Sitzstangen erreichbarer Nähe angeordnete Futtertröge sowie Tränkeeinrichtungen benutzen können. Für die Eiablage suchen die in dem Stall sich frei bewegenkönnenden Tiere ein Legenest auf, von denen je nach der Grösse des Stalls und der Anzahl darin lebender Tiere eine genügende Anzahl vorhanden sein muss. Die Legenester werden daher in Reihen nebeneinander und etagenweise übereinander angeordnet und meistens ist auf jeder Etage eine längs aller Legenester verlaufende Fördereinrichtung in Gestalt eines Transportbandes vorgesehen, um die Eier rationell einsammeln zu können.

Die bisher bei dieser Art der Geflügelhaltung verwendeten Legenester weisen verschiedene Nachteile auf, unter anderem ist die räumliche Anordnung des Transportbandes, des Abrollbodens und der Zugangöffnung zum Nest unzweckmässig mit der Folge, dass die Eier unnötigerweise mit von den Tieren stammendem Schmutz in Kontakt kommen, so dass Reinigungsarbeiten erforderlich sind. Ausserdem stellte man fest, dass die Tiere sich für die Eiablage gern in einen geschlossenen Raum begeben, wobei vor allem Holz als natürlicher Werkstoff das richtige Material für die Wände des Legenestes ist. Wenn man aber von dem bisher sehr viel verwendeten Drahtgitter für Eingrenzungen von Räumen in der Geflügelhaltung abkommt und Holz oder ein entsprechendes Ersatzmaterial wie Kunststoff verwendet, muss für eine gute Reinigungsmöglichkeit gesorgt werden. Das Reinigen einer eine grosse Zahl von Legenestern umfassenden Einrichtung lässt sich am zweckmässigsten durchführen, wenn die aus vielen Legenestern bestehende Einrichtung leicht zerlegbar ist.

Aus der Druckschrift FR-A-1 360 642 ist eine Legenest-Anlage bekannt, die etagenweise übereinander angeordnete Abrollnester aufweist, die jeweils an der Vorderseite für den Zugang offen sind und an der Rückseite soweit offen sind, dass die auf dem zur Rückseite hin geneigten Boden abrollenden Eier von der Rückseite aus eingesammelt werden können. Diese bekannte Anlage lässt sich nicht in grössere Einheiten derart zerlegen, dass diese bequem gereinigt werden können. Die Legenester und das Gestell sind bei dem etagenweisen Zusammenbau zusammengefügt und lassen sich nicht trennen.

Der vorliegenden Erfindung lag daher die Aufgabe zugrunde, eine Legenest-Anlage zu schaffen, die in einzelne Elemente, die jeweils eine Mehrzahl von Legenestern umfassen, so zerlegbar ist, dass nach Trennung dieser Elemente von dem Gestell jedes Element sich gut reigen lässt. Zur Lösung der vorgenannten Aufgabe weist die Legenest-Anlage die im

Anspruch 1 angeführten Merkmale auf. In bevorzugter Ausgestaltung besteht die Eier-Sammeleinrichtung aus einem Förderband, von denen jeweils eines auf jede Etage sich an der rückwärtigen Seite der kastenförmigen Elemente quer über die Tragarme erstreckt.

Ein Ausführungsbeispiel der Legenest-Anlage wird nachfolgend anhand der Zeichnungen näher beschrieben. Es zeigen:

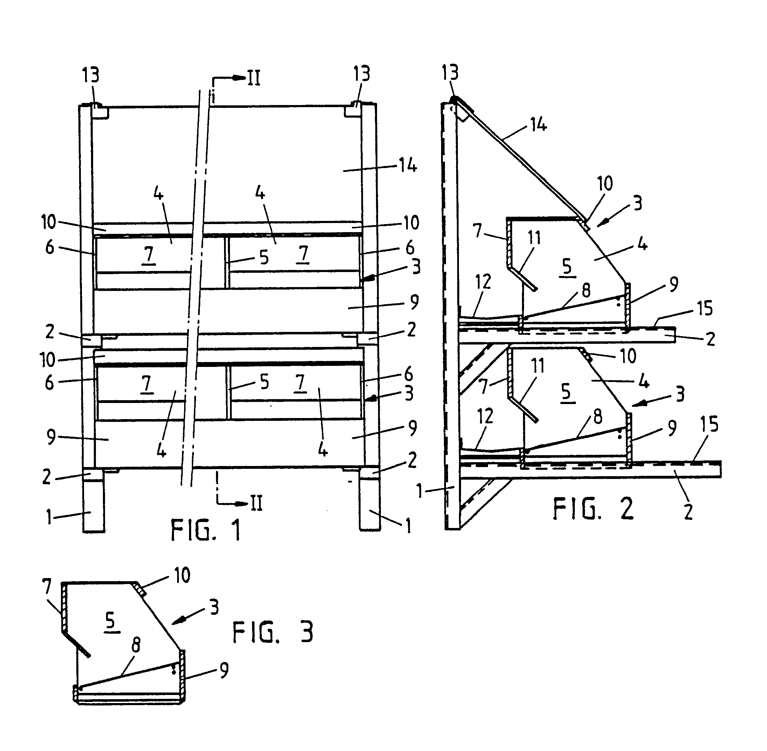

Fig. 1 den linken und rechten Teil der abgebrochen dargestellten Legenest-Anlage in Vorderansicht;

Fig. 2 einen Querschnitt durch die Legenest-Anlage gemäss der Linie II-II in Fig. 1;

Fig. 3 ein einzelnes aus der Legenest-Anlage herausnehmbares kastenförmiges Element im Querschnitt;

Fig. 4 eine schaubildliche Darstellung der Legenest-Anlage.

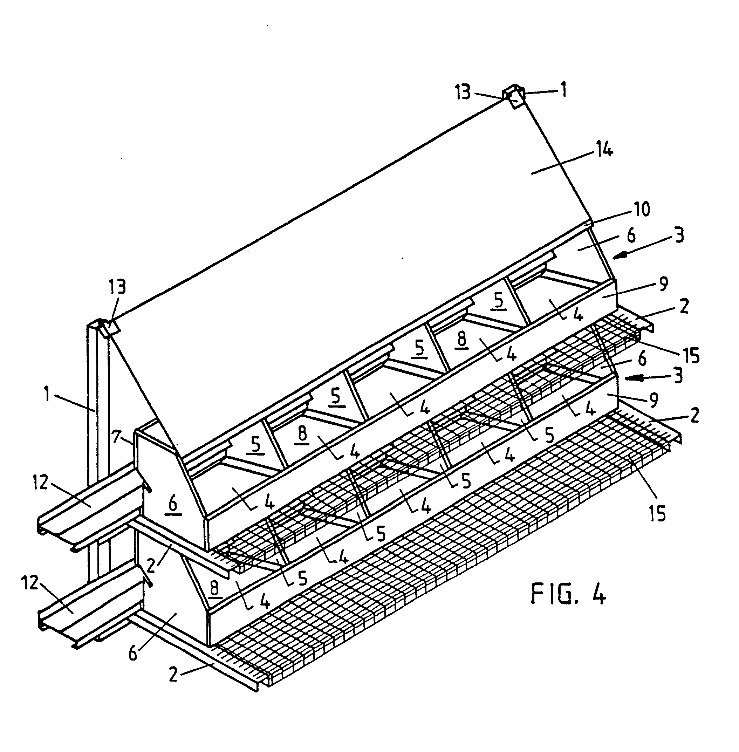

Die Legenest-Anlage für Geflügel weist zwei im Abstand voneinander zur Anbringung an einer Stallwand bestimmte vertikale Pfosten 1, die vorzugsweise aus einem Hohlprofil mit rechteckförmigem Querschnitt bestehen, und in Abständen übereinander an jedem Pfosten 1 auslegeartig befestigte Tragarme 2 auf, die mit den Pfosten 1 zusammen ein Gestell 1, 2 bilden, in welchem etagenweise übereinander auf je zwei auf gleicher Höhe angeordneten Tragarmen 2 je ein kastenförmiges Legenest-Element 3 abgestützt gehalten ist, welches mehrere in Reihen nebeneinander liegende Legenester 4 umfasst. Gemäss Fig. 4 umfasst ein Legenest-Element 3 fünf in Reihe nebeneinander liegende Legenester 4, die durch geschlossene Wände 5 aus Holz oder Kunststoffmaterial voneinander getrennt sind. Jedes eine Reihe von Legenestern 4 umfassende kastenförmige Legenest-Element 3 lässt sich zwecks Reinigung leicht nach vorn aus dem Gestell 1, 2 herausnehmen. Jedes Legenest 4 soll möglichst weitgehend einen von Wänden umschlossenen Raum bilden. Die eine Reihe von Legenestern 4 umfassenden herausnehmbaren kastenförmigen Elemente 3 weisen daher jeweils mit den Zwischenwänden 5 gleich ausgebildete Wände 6 an den Enden, eine durchgehende Rückwand 7, die nicht bis zum Boden reicht, damit darunter die Eier hindurchrollen können, und einen schrägen Abrollboden 8 auf, der zur Rückwand 7 hin abfällt. Eine halbhohe Vorderwand 9, die den zu der Vorderwand 9 hin ansteigenden Abrollboden 8 etwas überragt und eine von der zurückversetzten Oberkante der Wände 5 und 6 nach vorn abwärts geneigte Vorderwandleiste 10 bilden bei jedem kastenförmigen Element 3 die Vorderseite, wobei zwischen dieser Vorderwandleiste 10 und der halbhohen Vorderwand 9 das kastenförmige Element 3 für den Zugang zu jedem Legenest 4 offen ist.

Bei Benutzung des Legenestes schauen die Tiere nach vorne aus der offenen Seite des Legenestes heraus. Damit die nach hinten abrollenden Eier möglichst wenig verschmutzt werden, ist der Freiraum innerhalb des Legenestes durch eine an der Unterkante der Rückwand 7 des kastenförmigen Elementes 3 nach unten schräg einwärts gerichtete Leiste 11, die vorzugsweise aus Drahtgitter besteht, etwas eingeengt, um als Schikane zu verhindern, dass die Tiere im rückwärtigen Bereich des Legenestes 4 sitzen und dort die Rollstrecke der Eier und die unmittelbar an das kastenförmig Element 3 anschliessend zwischen diesem und den Pfosten 1 des Gestells angeordnete Eier-Sammeleinrichtung 12 beschmutzen. Diese kann aus einer horizontal angeordneten Rinne aus einem profilierten Blech bestehen. Auf jeder Etage ist hinter einem kastenförmigen Element 3 eine solche Rinne 12 angeordnet. Vorzugsweise bewegt sich darüber ein Förderband zum Wegführen der Eier.

Am oberen Ende der Pfosten 1 ist mittels Schwenkgelenken 13 eine schwenkbare Dachfläche 14 befestigt, die mit ihrem unteren Rand gegen die vorderseitige Oberkante des auf der oberen Etage befindlichen kastenförmigen Elementes 3 anliegt und die verhindern soll, dass die Tiere auf diesem oberen kastenförmigen Element absitzen und es verschmutzen. Die schwenkbare Befestigung der Dachfläche 14 ermöglicht die Wegnahme des kastenförmigen Elementes 3 zwecks Reinigung.

Auf jeder der vorhandenen Etagen ist vor dem kastenförmigen Element 3 eine an den horizontalen Tragarmen 2 befestigte Drahtgitterfläche 15 angeordnet, die als Landeplatz den Tieren die Benutzung der Legenester ermöglicht.

Die Anzahl der in Reihe nebeneinander angeordneten Legenester 4 und damit die Länge eines kastenförmigen Elementes 3 ist nicht festgelegt und hängt nur davon ab, dass dieses kastenförmige Element noch bequem tragbar ist, um es aus dem Gestell herausnehmen zu können. In einem Stall sind eine Mehrzahl von Legenest-Anlagen der vorbeschriebenen Art an einer Stallwand befestigt, wobei die auf jeder Etage vorhandene Sammeleinrichtung 12 für die Eier sich über sämtliche nebeneinander angeordneten Legenest-Anlagen erstreckt. Natürlich kann die Anlage auch mehr als zwei Etagen aufweisen.

Ferner ist es auch möglich, Legenest-Anlagen, bei denen in abgewandelter Ausführungsform die Pfosten querverlaufende Füsse aufweisen, mit ihren Rückseiten gegeneinander und mit aneinanderliegenden Pfosten frei im Raum aufzustellen.

## Patentansprüche

1. Legenest-Anlage für Geflügel mit in Reihen nebeneinander und etagenweise übereinander in einem Gestell angeordneten Abrollnestern, dadurch gekennzeichnet, dass das Gestell (1, 2) aus vertikalen Pfosten (1) und in Abständen übereinander an jedem Pfosten (1) auslegeartig befestigten Tragarmen (2) besteht, von denen die auf gleicher Höhe angeordneten Tragarme (2) jeweils ein mehrere in Reihe nebeneinander liegende und durch Zwischenwände (5) abgetrennte Legenester (4) umfassendes kastenförmiges Element (3) tragen, welches aus dem Gestell (1, 2) nach vorn zwecks Reinigung herausnehmbar ist, und dass auf den Tragarmen (2) jeder Etage zwischen den vertikalen Pfosten (1) und dem kastenförmigen Element (3) eine Eier-Sammeleinrichtung (12) zur Aufnahme der von den Abrollböden (8) der zu der Sammeleinrichtung hin unten offenen Legenester (4) abrollenden Eier angeordnet ist.

2. Legenest-Anlage nach Anspruch 1, dadurch gekennzeichnet, dass zwischen den vertikalen Gestell-Pfosten (1) und dem kastenförmigen Element (3) ein Förderband (12) als Eier-Sammeleinrichtung angeordnet ist.

3. Legenest-Anlage nach Anspruch 1, dadurch gekennzeichnet, dass oberhalb des in der obersten Etage angeordneten kastenförmigen Legenest-Elementes (3) eine am Gestell (1, 2) gelenkig befestigte, geneigt angeordnete Schutzwand (14) zur Überdachung des Legenest-Elementes (3) und der Eier-Sammeleinrichtung (12) zum Schutz gegen Verschmutzung angeordnet ist.

4. Legenest-Anlage nach Anspruch 1, dadurch gekennzeichnet, dass das Gestell (1, 2) durch Füsse ergänzte Pfosten (11) aufweist, um Legenest-Anlagen mit ihren Rückseiten und den Pfosten gegeneinander frei aufzustellen.

## Claims

1. Laying nest installation for domestic fowls, in which roll-off nests are arranged in a frame alongside one another in rows and above one another in tiers, characterised in that the frame (1, 2) consists of vertical posts (1) and carrier arms (2) attached to each post (1), spaced above one another and spread out, with the carrier arms (2) arranged at the same height each carrying a box-shaped component (3) comprising a plurality of laying nests (4) alongside one another in a row and separated by partitions (5), said box-shaped component (3) being adapted to be withdrawn through the front of the frame (1, 2) for cleaning, and that on the carrier arms (2) of each tier an egg collector (12) is arranged between the vertical posts (1) and the box-shaped component (3), for receiving the eggs which roll down from the roll-off floors (8) of the laying nests (4) which are open at the bottom towards the collector.

2. Laying nest installation according to Claim 1, characterised in that between the vertical posts (1) of the frame and the box-shaped component (3) there is arranged a conveyor belt (12) as an egg collector.

3. Laying nest installation according to Claim 1, characterised in that the box-shaped laying nest component (3) arranged in the topmost tier there is arranged a sloping protecting wall (14), which hinges on the frame (1, 2), to cover over the laying nest component (3) and the egg collector (12) and protect them from dirt.

4. Laying nest installation according to Claim 1, characterised in that the frame (1, 2) has posts supplemented by feet, to enable laying nest installations to be erected freestanding with their back walls and posts against one another.

## Revendications

1. Installation pondoirs-nids pour volaille avec des nids à fond incliné disposés en rangées l'un à côté de l'autre et superposés en étages dans un bâti, caractérisée en ce que le bâti (1, 2) se compose de consoles (1) verticales et de bras porteurs (2) fixés en porte à faux espacés l'un au dessus de l'autre sur lesdites consoles (1), les bras porteurs (2) disposés sur un même niveau portant chaque fois un caisson (3) englobant des pondoirs-nids (4) disposés l'un à côté de l'autre en rangé et séparés par des cloisons de séparation (5), chaque caisson pouvant être enelvé du bâti (1, 2) vers l'avant en vue de son nettoyage et en ce qu'il est prévu sur les bras porteurs (2) de chaque étage, entre les consoles verticales (1) et le caisson (3) un dispositif collecteur d'oeufs (12) destiné à recevoir les oeufs roulant sur les fonds inclinés (8) des nids (4) ouverts à leur partie inférieure en direction du dispositif collecteur.

2. Installation pondoirs-nids selon la revendication 1, caractérisée en ce qu'il est prévue entre les consoles verticales (1) du bâti et le caisson (3) une bande transporteuse (12) formant ledit dispositif collecteur.

3. Installation pondoirs-nids selon la revendication 1, caractérisée par une paroi de protection inclinée (14) formant un toit pour le caisson (3) et le dispositif collecteur d'oeufs (12) et une protection contre l'encrassement, ladite paroi étant fixée par une articulation contre le bâti (1, 2) au-dessus du caisson (3) disposée dans l'étage la plus haute.

4. Installation pondoirs-nids selon la revendication 1, caractérisée en ce que le bâti (1, 2) comprend des consoles (1) complétées par des pieds pour permettre la disposition indépendante, dos contre dos et console contre console, d'installations pondoirs-nids.

FIG. 1

FIG. 2

FIG. 3

FIG. 4